# EUROPÄISCHE PATENTSCHRIFT

(11) **EP 2 817 199 B1**
(45) Veröffentlichungstag und Bekanntmachung des Hinweises auf die Patenterteilung: **27.04.2016**
(21) Anmeldenummer: 12812870.9
(22) Anmeldetag: 22.12.2012
(51) Int. Cl.: B62D 25/00, B62D 25/10, B62D 29/04, B60Q 1/26, B60R 13/04, B29C 70/70

(54) **BAUTEIL FÜR DIE AUSSENFLÄCHE EINES FAHRZEUGS**
COMPONENT FOR THE EXTERIOR SURFACE OF A VEHICLE
ÉLÉMENT STRUCTURAL POUR LA SURFACE EXTÉRIEURE D'UN VÉHICULE

(30) Priorität: 21.02.2012 DE 102012003452
(43) Veröffentlichungstag der Anmeldung: 31.12.2014
(73) Patentinhaber: Daimler AG, 70327 Stuttgart (DE)
(72) Erfinder: GNEITING, Philipp, 70199 Stuttgart (DE); ROTHENBURGER, Holger, 89073 Ulm (DE); HUMPENÖDER, Jens, 89077 Ulm (DE); STEIN, Philipp, 89073 Ulm (DE); VEEH, Margit, 89077 Ulm (DE)
(74) Vertreter: JENSEN & SON
(86) Internationale Anmeldenummer: PCT/EP2012/005366
(87) Internationale Veröffentlichungsnummer: WO 2013/123959

(56) Entgegenhaltungen:
- EP-A1- 1 316 495
- DE-A1- 10 319 396
- DE-A1-102005 061 507
- DE-A1-102008 023 156
- US-A1- 2008 220 678

## Beschreibung

Die Erfindung betrifft ein Bauteil für die Außenfläche eines Fahrzeugs nach der im Oberbegriff von Anspruch 1 näher definierten Art. Ein solches gattungsgemäßes Bauteil ist z.B. aus der DE 102008023156A1 bekannt.

Neben Blechbauteilen als Verkleidungsteile für die Außenfläche von Fahrzeugen sind mittlerweile Bauteile aus faserverstärktem Kunststoffmaterial allgemein bekannt und üblich. Solche Bauteile umfassen typischerweise einen Faserverbund und wenigstens einen den Faserverbund stabilisierenden Matrixwerkstoff. Ein solcher Matrixwerkstoff, welcher typischerweise als Kunststoff ausgebildet ist, hält die einzelnen Fasern zusammen und versiegelt den Faserverbund typischerweise nach außen hin gegenüber Umwelteinflüssen. Dabei sind verschiedene Matrixwerkstoffe bekannt und üblich, beispielsweise Harze, thermoplastische Kunststoffe oder dergleichen. Das Verkleidungsteil kann zur Versiegelung der Außenfläche gegenüber Umwelteinflüssen und zur gestalterischen Farbgebung mit einem Lack versehen sein. Hierbei sind sowohl thermisch vernetzende als auch mittels UV aushärtbare und vernetzende Lacke, Lackfolien oder dergleichen denkbar und möglich.

Daneben ist es aus dem allgemeinen Stand der Technik bekannt, dass in textile Materialien, welche beispielsweise für Bekleidung oder für die Innenauskleidung von Fahrzeugen eingesetzt werden können, optisch oder optisch-elektrisch aktive Elemente eingeführt werden können. So ist es beispielsweise aus einer Veröffentlichung in der Ostthüringer Zeitung vom 21.5.2010 des Instituts für Spezialtextilien und flexible Materialien unter dem Titel "Nicht nur für den Autohimmel" bekannt, dass selbstleuchtende Textilien durch die Integration von miniaturisierten SMD-LEDs aufgebaut werden können. Aus der Veröffentlichung sind auch elektrolumineszierende Textilien bekannt, welche beispielsweise mit elektrolumineszierenden Pasten im Siebdruckverfahren in der gewünschten Art und Weise bedruckt werden können. Über in Ferner ist die Integration von Lichtwellenleitern bzw. Lichtleitfasern in derartigen Materialien durch Arbeiten des Thüringer Textilforschungsinstituts (TITV Greiz) bekannt.

Ein Verkleidungselement mit einer Öffnung, welche mittels eines Elektrolumineszenz-Leuchtmittels hinterlegt ist, ist durch das deutsche Gebrauchsmuster 20313996 U1 beschrieben. Außerdem beschreibt die DE 10 2010 013 784 A1 eine Membran, welche mit lumineszierenden Substanzen versehen wird, sodass diese nach Lichteinstrahlung nachleuchtet und im Straßenverkehr besser zu erkennen ist.

Aus weiteren Schriften zum Stand der Technik sind lichtleitende Fasern in gewirkten oder gestrickten Textilien, beispielsweise aus der DE 101 10 329 A1, oder im Rahmen eines faserverstärkten Kunststoffbauteils auch aus der DE 10 2005 061 507 A1 bekannt.

Die Aufgabe der hier vorliegenden Erfindung besteht nun darin, ein Bauteil für die Außenfläche eines Fahrzeugs anzugeben, welches eine hohe Flexibilität bei der Gestaltung mit minimalem Mehraufwand bei der Herstellung bietet.

Erfindungsgemäß wird diese Aufgabe durch ein Bauteil mit den Merkmalen im kennzeichnenden Teil des Patentanspruchs 1 gelöst. Weitere vorteilhafte Ausgestaltungen des erfindungsgemäßen Bauteils ergeben sich aus den restlichen hiervon abhängigen Ansprüchen.

Das erfindungsgemäße Bauteil ist im Wesentlichen als Bauteil aus einem Faserverbundwerkstoff aufgebaut. Es weist einen Faserverbund auf sowie wenigstens einen Matrixwerkstoff, welcher den Faserverbund stabilisiert. Erfindungsgemäß sind in den Faserverbund optisch oder optisch-elektrisch aktive Elemente integriert. Durch diese funktionelle Integration von optischen oder optisch-elektrisch aktiven Elementen in den ohnehin vorhandenen Faserverbund des Bauteils lässt sich ein sehr leichtes Bauteil realisieren. Ohne großen zusätzlichen Aufwand kann beim Herstellen des Faserverbunds beispielsweise durch Weben, Stricken oder Wirken eine Funktionsintegration von optisch aktiven oder optisch-elektrisch aktiven Elementen in den Faserverbund erfolgen. Hierdurch lassen sich elektrolumineszierende Effekte in der Außenhaut des Fahrzeugs einfach, hochflexibel und sehr effizient realisieren. Dies ermöglicht die Herausstellung signifkanter Designmerkmale, beispielsweise durch ein Beleuchten des Dachs, durch ein Hervorheben von Linien oder Kanten. Ergänzend oder alternativ dazu kann eine Signalgebung für Warnhinweise auf dem Fahrzeug erfolgen, beispielsweise blinkende Darstellungen oder Warnsymbole.

Außerdem sind Informationen, wie beispielsweise die Markierung von entsprechenden Stellen des Fahrzeugs, möglich. So wäre es beispielsweise denkbar, wenn im Dunkeln ein Fahrer auf das Fahrzeug zugeht, den Bereich des Türgriffs über Elektrolumineszenz zu markieren, sodass er diesen schnell und einfach findet. Ein weiterer sehr vorteilhafter Einsatz wäre die Verwendung des Bauteils als Werbefläche. Hierdurch wird es möglich, wechselnde Werbung auf der Außenfläche eines Fahrzeugs anzubringen und diese inhaltlich und/oder optisch, je nach Bedarf, der Umgebung in welcher sich das Fahrzeug bewegt, Lichtverhältnissen und dergleichen anzupassen.

Durch die unmittelbare Funktionsintegration der Bauteile hält sich dabei der Mehraufwand gegenüber herkömmlichen faserverstärkten Verbundbauteilen als Bauteile für die Außenhaut eines Fahrzeugs in engen Grenzen. Der Zusatzeffekt lässt sich somit einfach, effizient und sehr kostengünstig erzielen.

Dabei kann es ergänzend oder alternativ vorgesehen sein, dass der Faserverbund als optisch aktive Elemente eine zumindest partielle elektrolumineszierende Beschichtung aufweist, welche in Kontakt mit elektrisch leitfähigen Fasern in dem Faserverbund steht. Beispielsweise kann der Faserverbund über Siebdruckverfahren in der gewünschten Ausgestaltung und im gewünschten Design mit elektrolumineszierenden Materialien beschichtet werden, welche insbesondere als Paste auf den Faserverbund aufgetragen werden können. Über elektrisch leitfähige Fasern in dem Faserverbund, insbesondere durch galvanische Verfahren metallisch beschichtete Garne oder dergleichen, kann eine Beaufschlagung der elektrolumineszierenden Beschichtung mittels der zur Anregung benötigten elektrischen Leistung sehr einfach und effizient erfolgen. Dadurch, dass die elektrolumineszierende Beschichtung beispielsweise durch Siebdruckverfahren in annähernd jeder Formgebung aufgebracht werden kann, ist diese insbesondere für Beschriftungen, Werbung oder dergleichen sehr gut geeignet. Auch ein vollflächiges schwaches Leuchten des gesamten Fahrzeugs, wenn dessen Außenfläche insgesamt aus erfindungsgemäßen Bauteilen aufgebaut ist, kann so realisiert werden. Dies ist ein erheblicher Sicherheitsvorteil, beispielsweise bei diffuser Beleuchtung.

Um den optischen Effekt besonders deutlich sichtbar zu machen, kann es gemäß einer vorteilhaften Ausgestaltung des erfindungsgemäßen Bauteils dabei vorgesehen sein, dass der Matrixwerkstoff zumindest teilweise transparent ausgebildet ist. Ein zumindest teilweise transparenter Matrixwerkstoff kann insbesondere im Zusammenspiel mit entsprechend angeordneten optisch aktiven bzw. optisch-elektrisch aktiven Elementen in dem Bauteil zu besonderen Designeffekten führen, beispielsweise indem durch eine örtliche Variation in der Transparenz des Matrixwerkstoffs unterschiedliche Leuchteffekte realisiert werden.

In einer besonders günstigen und vorteilhaften Weiterbildung des erfindungsgemäßen Bauteils ist dabei auch eine Versiegelung des Bauteils, beispielsweise über Lacke oder Lackfolien, zumindest teilweise transparent ausgebildet. Dies kann insbesondere bei einem vollflächig leuchtenden Bauteil so realisiert sein, dass durch eine geeignete Ausgestaltung der Versiegelung lediglich einzelne Bereiche mit voller Intensität leuchten, während andere Bereiche durch die in diesem Bereich nicht transparente Versiegelung abgeschirmt oder teilweise abgeschirmt werden, sodass sich unterschiedliche Leuchtintensitäten an unterschiedlichen Orten der Fläche des Bauteils ergeben.

Das erfindungsgemäße Bauteil ist dabei ist dabei vorzugsweise als Verkleidungsbauteil, insbesondere leicht austauschbares Verkleidungsbauteil ausgestaltet. Denkbar ist aber auch, erfindungsgemäße Strukturbauteile vorzusehen, die zumindest teilweise sichtbar bleiben, d.h., die zumindest teilweise nicht verkleidet werden.

Weitere Ausgestaltungen des erfindungsgemäßen Bauteils ergeben sich aus den restlichen abhängigen Ansprüchen und werden anhand des Ausführungsbeispiels deutlich, welches nachfolgend unter Bezugnahme auf die Figuren näher dargestellt ist.

Dabei zeigen:
- Fig. 1: eine Motorhaube als Beispiel für ein erfindungsgemäßes Bauteil;
- Fig. 2: ein Detail aus einem in der Motorhaube integrierten Faserverbund; und
- Fig. 3: mehrere Beispiele für einen möglichen Einsatz des erfindungsgemäßen Verkleidungsteils.

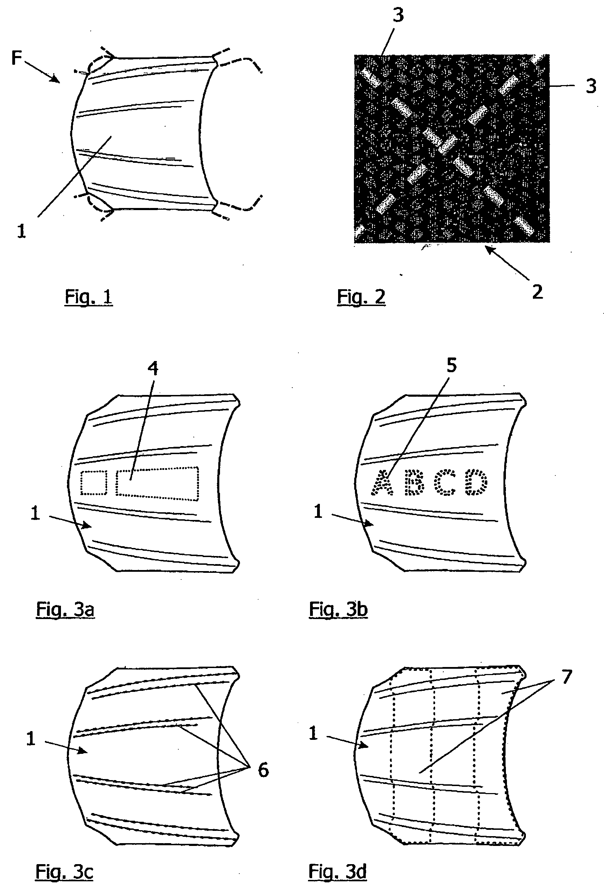

In der Darstellung der Figur 1 ist die Draufsicht auf eine Motorhaube 1 als Beispiel für ein Bauteil 1 gemäß der Erfindung dargestellt. Selbstverständlich können neben diesem Verkleidungsteil als Bauteil 1 für die Außenhaut eines in seiner Gesamtheit nicht dargestellten Fahrzeugs F auch andere Bauteile, beispielsweise Türen, Kotflügel, Dächer, Spoiler oder andere, im Außenbereich des Fahrzeugs F angebrachte Verkleidungs-, Anbau- oder Strukturbauteile ganz oder teilweise als Bauteil im Sinne der Erfindung ausgeführt sein.

Die beispielhafte Motorhaube 1 weist einen Faserverbund 2 beispielsweise in Form eines Kohlefasergewebes auf, welche über einen Matrixwerkstoff zu einem faserverstärkten Verbundbauteil stabilisiert wird. Die Motorhaube 1 kann teilweise oder ganz aus einem solchen faserverstärkten Kunststoff mit dem Faserverbund 2 als tragendem Bestandteil bestehen.

Neben der Verwendung von Kohlefasern können selbstverständlich auch andere Fasertypen wie beispielsweise Aramid-, Kevlar-, Polyamidfasern oder ähnliche Fasern zur Herstellung des Faserverbunds eingesetzt werden.

In der vergrößerten Darstellung der Figur 2 ist ein solcher Faserverbund 2 in einer vergrößerten Darstellung zu erkennen. Bei dem hier exemplarisch dargestellten Faserverbund 2 handelt es sich um einen Faserverbund, welcher in Form eines Gewebes aus einzelnen Faserbündeln, sogenannten Rovings, realisiert ist. In diesen Faserverbund 2 können nun optisch oder optisch-elektrisch aktive Elemente 3 integriert sein. Im hier dargestellten Ausführungsbeispiel erfolgt dies in Form von zwei mit dem Bezugszeichen 3 versehenen elektrolumineszierenden Fasern bzw. Faserbündeln. Diese sind in dem in Figur 2 dargestellten Faserverbund 2 deutlich zu erkennen. Sie können beispielsweise durch Anlegen einer elektrischen Leistung zum Leuchten angeregt werden. Dabei ist eine vielfältige Gestaltung möglich, da typische Gestaltungstechniken aus der Textilindustrie eingesetzt werden können, um geeignete Bereiche des Faserverbunds 2 so mit den elektrolumineszierenden Fasern 3 zu versehen. So lassen sich vielfältige Designmöglichkeiten, das Anbringen von Warnzeichen, Werbung oder dergleichen auf der Motorhaube 1 oder an den Verkleidungsteilen 1 realisieren. Die elektrolumineszierenden Fasern 3 müssen dabei lediglich mit elektrischer Leistung versorgt werden, um sie zum Leuchten anzuregen. Mit minimalem elektrischen Energieeintrag lässt sich so ein gezieltes Leuchten bestimmter Bereiche des Faserverbunds 2 erzielen. Durch entsprechende Abdeckung mit teilweise transparenten und teilweise nicht transparenten Versiegelungen oder einem teilweise transparenten und teilweise nicht transparenten Matrixwerkstoff lassen sich weitere Details in das Design des optisch aktiven Verkleidungselements 1 integrieren.

In der Darstellung der Figur 3 sind rein beispielhaft vier verschiedene mögliche Varianten gezeigt. So ist beispielsweise bei der in Figur 3a gezeigten Motorhaube 1 ein graphisches Element 4 in Form eines Ausrufezeichens leuchtend auf der Motorhaube 1 angebracht. Dies kann beispielsweise als Warnzeichen bei Bedarf aktiviert werden. In der Darstellung der Figur 3b ist beispielhafter ein Schriftzug 5 dargestellt, in der Darstellung der Figur 3c sind einzelne Kanten durch Linien 6 als Designelemente auf der Motorhaube 1 leuchtend hervorgehoben.

In der Darstellung der Figur 3d ist eine weitere Variante dargestellt. Anstelle von einzelnen elektrolumineszierenden Fasern 3 wie bei den bisherigen Ausführungsbeispielen sind hier - nicht dargestellte - elektrisch leitfähige Fasern, beispielsweise mit einer metallischen Schicht versehene Garne oder dergleichen, in den Faserverbund 2 integriert. Sie stehen mit einer Beschichtung 7 aus elektrolumineszierendem Material, welche auf dem Faserverbund 2 angebracht ist, in Verbindung. In der Darstellung der Figur 3d ist diese Beschichtung 7 in Form von zwei Querbalken, welche über die Motorhaube 1 verlaufen, dargestellt. Bei Beaufschlagung der elektrisch leitfähigen Fasern mit Spannung werden dann nicht die einzelne Fasern, sondern die beiden mit 7 bezeichneten Querbalken zum Leuchten angeregt. Hierdurch entsteht ein großflächiger optischer Effekt.

Die Darstellungen sind dabei rein beispielhaft zu verstehen, dem Gestaltungsspielraum hinsichtlich Form, Farbe und Intensität der optisch aktiven bzw. optisch-elektrisch aktiven Elemente sind dabei gestalterisch keine Grenzen gesetzt.

## Patentansprüche

1. Bauteil (1) für die Außenfläche eines Fahrzeugs (F),
umfassend einen Faserverbund (2) und wenigstens einen den Faserverbund (2) stabilisierenden Matrixwerkstoff, wobei
in dem Faserverbund (2) optisch oder optisch-elektrisch aktive Elemente (3) integriert sind;
**dadurch gekennzeichnet, dass**
die optisch aktiven Elemente (3) elektrolumineszierende Fasern (3) umfassen und/oder der Faserverbund (2) als optisch aktive Elemente (3) eine zumindest partielle elektrolumineszierende Beschichtung (7) aufweist, welche in Kontakt mit elektrisch leitfähigen Fasern in dem Faserverbund (2) steht.

2. Bauteil (1) nach Anspruch 1,
**dadurch gekennzeichnet, dass**
der Faserverbund (2) mit den optisch aktiven Elementen (3) bestickt ist.

3. Bauteil (1) nach Anspruch 1 oder 2,
**dadurch gekennzeichnet, dass**
der Faserverbund (2) als Gewebe, Geflecht, Gewirke, Gelege oder Gestrick aus Fasern ausgebildet ist.

4. Bauteil (1) nach einem der Ansprüche 1 bis 3,
**dadurch gekennzeichnet, dass**
der Matrixwerkstoff zumindest teilweise transparent ausgebildet ist.

5. Bauteil (1) nach einem der Ansprüche 1 bis 4,
**gekennzeichnet durch**
eine zumindest teilweise transparente Versiegelung.

6. Bauteil nach einem der Ansprüche 1 bis 4,
**dadurch gekennzeichnet, dass**
es sich um ein Verkleidungsteil oder um ein Strukturbauteil handelt.

## Claims

1. Component (1) for the exterior surface of a vehicle (F),
comprising a fibrous composite (2) and at least one matrix material stabilising the fibrous composite (2), wherein
optically or optically-electrically active elements (3) are integrated into the fibrous composite (2);
**characterised in that**
the optically active elements (3) comprise electroluminescent fibres (3), and/or **in that** the fibrous composite (2) has, as optically active elements (3), an at least partially electroluminescent coating (7) in contact with electrically conductive fibres in the fibrous composite (2).

2. Component (1) according to claim 1,
**characterised in that**
the fibrous composite (2) is embroidered with the optically active elements (3).

3. Component (1) according to claim 1 or 2,
**characterised in that**
the fibrous composite (2) is designed as a woven fabric, a braided fabric, a knitted fabric or an interlaid scrim made of fibres.

4. Component (1) according to any of claims 1 to 3,
**characterised in that**
the matrix material is at least partially transparent.

5. Component (1) according to any of claims 1 to 4,
**characterised by**
an at least partially transparent sealer.

6. Component according to any of claims 1 to 4,
**characterised in that**
it is a trim component or s structural component.

## Revendications

1. Composant (1) pour la surface extérieure d'un véhicule (F), comprenant un matériau (2) renforcé par des fibres et au moins une matrice stabilisant le matériau composite (2) renforcé par des fibres, des éléments (3) optiquement ou électro-optiquement actifs étant intégrés dans le matériau (2) renforcé par des fibres ; **caractérisé en ce que** les éléments (3) optiquement actifs comprennent des fibres (3) électroluminescentes et/ou le matériau composite (2) présente en tant qu'éléments (3) actifs optiquement un revêtement (7) au moins partiellement électroluminescent, qui est en contact avec des fibres électroconductrices dans le matériau composite (2) renforcé par des fibres.

2. Composant (1) selon la revendication 1, **caractérisé en ce que** le matériau composite (2) renforcé par des fibres est brodé avec les éléments (3) actifs optiquement.

3. Composant (1) selon la revendication 1 ou la revendication 2, **caractérisé en ce que** le matériau composite (2) renforcé par des fibres est conçu en tant que tissu, treillis, article à mailles, tissu non tissé ou article tricoté en fibres.

4. Élément structural (1) selon l'une quelconque des revendications 1 à 3, **caractérisé en ce que** la matrice est au moins en partie transparente.

5. Composant (1) selon l'une quelconque des revendications 1 à 4, **caractérisé par** une imperméabilisation au moins en partie transparente.

6. Composant selon l'une quelconque des revendications 1 à 4, **caractérisé en ce qu'**il s'agit d'un élément de revêtement ou d'un composant structural.
